# EUROPEAN PATENT SPECIFICATION

(11) **EP 2 606 576 B1**
(45) Date of publication and mention of the grant of the patent: **17.01.2024**
(21) Application number: 11818697.2
(22) Date of filing: 16.08.2011
(51) Int. Cl.: H04L 12/64, H04B 10/2575, H04W 88/08

(54) **DAISY-CHAINED RING OF REMOTE UNITS FOR A DISTRIBUTED ANTENNA SYSTEM**
DAISY-CHAIN-RING AUS ENTFERNTEN EINHEITEN FÜR EIN VERTEILTES ANTENNENSYSTEM
ANNEAU EN GUIRLANDE D'UNITÉS DISTANTES POUR SYSTÈME D'ANTENNE RÉPARTI

(30) Priority: 21.12.2010 US 928943; 21.12.2010 US 928934; 21.12.2010 US 928933; 21.12.2010 US 928931; 07.02.2011 US 201161439940 P; 14.09.2010 US 382836 P; 17.08.2010 US 374593 P
(43) Date of publication of application: 26.06.2013
(60) Divisional application: 23201699.8
(73) Proprietor: Dali Systems Co. Ltd., Grand Cayman (KY)
(72) Inventor: STAPLETON, Shawn Patrick, Burnaby, BC V5A 4C6 (CA); LEMSON, Paul, Woodinville, WA 98077 (US); LIN, Bin, Coquitlam, BC V3E 2W8 (CA); LEE, Albert S., Menlo Park, CA 94025 (US)
(74) Representative: Witte, Weller & Partner Patentanwälte mbB
(86) International application number: PCT/US2011/048004
(87) International publication number: WO 2012/024349

(56) References cited:
- EP-A1- 1 713 290
- US-A1- 2002 093 926
- US-A1- 2002 186 436
- US-A1- 2003 181 221
- US-A1- 2006 121 944
- US-A1- 2007 281 643
- US-A1- 2008 045 254
- US-A1- 2008 146 146
- US-A1- 2010 177 760

## Description

### FIELD OF THE INVENTION

The present invention generally relates to wireless communication systems employing Distributed Antenna Systems (DAS) as part of a distributed wireless network. More specifically, the present invention relates to a DAS utilizing one or more remotely monitored and controlled digital access units configured to assign particular packet transmissions to selected ones of a plurality of remote units, which can in some embodiments be configured in a daisy-chained rings.

### BACKGROUND OF THE INVENTION

Wireless and mobile network operators face the continuing challenge of building networks that effectively manage high data-traffic growth rates. Mobility and an increased level of multimedia content for end users requires end-to-end network adaptations that support both new services and the increased demand for broadband and flat-rate Internet access. One of the most difficult challenges faced by network operators is maximizing the capacity of their DAS networks while ensuring cost-effective DAS deployments and at the same time providing a very high degree of DAS remote unit availability. US 2010/0177760 A1 provides an example of a DAS network.

EP 1 713 290 A1 provides an example of various interconnections of base band units and RF units in a distributed base station.

In order to provide DAS network capacity which is high enough to meet short-term needs of network subscribers in specific locations yet also avoid costly and inefficient deployment of radio resources, DAS network planners prefer to employ DAS architectures and solutions which provide a high degree of dynamic flexibility. Therefore, it would be advantageous for wireless network operators to employ a DAS solution which has a high degree of flexibility to implement dynamic rearrangements based on ever-changing network conditions and subscriber needs. Also, the more future-proof a DAS deployment can be, generally the lower its life cycle cost.

DAS network planners and system integrators employ a wide range of innovative approaches for helping to ensure that a particular DAS deployment is as cost-effective as possible. The types of costs considered by network planners and integrators include DAS deployment or DAS installation cost, as well as operational costs including maintenance costs, emergency restoration costs and network re-arrangement costs. Rearrangement costs are particularly significant for indoor DAS applications, due to frequent changes in building use and facility needs changes. Therefore, it would be advantageous to employ DAS systems and methods which are based on as few DAS transport facilities as possible to minimize installation and/or lease costs and have self-healing capabilities to avoid the need for costly emergency restoration services.

In order to obtain a high degree of DAS remote unit availability, two primary conditions must be satisfied. First, the DAS remote unit itself must be inherently reliable. Second, the transport media e.g., optical fiber, must be very reliable. It is well known that electronic and/or optical connections themselves are a significant root cause of failure or reduced availability in a DAS network. Companies who maintain outdoor DAS networks have reported that a failure of outside plant optical fiber facilities is not as rare as would be desirable. Therefore, it would be advantageous to employ systems and methods which offer higher redundancy and/or self-healing features in the event of failure of a transport media connection.

### SUMMARY OF THE INVENTION

The present invention substantially achieves the advantages and benefits discussed above and overcomes the limitations of the prior art discussed above by providing a distributed antenna system as claimed in claim 1 and a corresponding method as claimed in claim 7. Preferred embodiments are defined in the dependent claims. The distributed antenna system comprises at least two base stations and having at least two but in some embodiments a plurality of Digital Access Units ("DAU's"), each operating to control the packet traffic of an associated plurality of Digital Remote Units ("DRU's"). In embodiments employing multiple DAU's, the DAU's can be daisy-chained linearly or in a ring configuration. Likewise, depending upon the implementation, the DRU's associated with a given DAU can be configured in either a linear or ring Daisy chain configuration.

The data received from the base stations is down-converted, digitized and converted to baseband with the DAU. The data streams are then I/Q mapped and framed and independently serialized, such that multiple data streams are available in parallel from the DAU. In at least some embodiments, the DAU communicates with the associated DRU's via an optical transport arrangement. It will be appreciated by those skilled in the art that, using the present invention, it is possible to configure a distributed antenna system having n base stations, each providing m RF outputs for transmission by one or more associated DAU's to o DRU's, where the only limits are imposed by the technical performance specifications of the particular DAS, such as delay.

By the use of a ring configuration for connecting, in at least some embodiments, the DRU's and/or the DAU's, fault tolerance is built into the system, with resulting high availability. In single DAU embodiments, each DRU is accessible through two paths, and therefore remains available even in the event of a line break. In multi-DAU embodiments, where the DAU's are linearly daisy-chained, each DRU is accessible from multiple DRU's such that even some DAU failures will not prevent system operation. In embodiments employing a ring connection for the DAU's, multiple paths exist to each DAU, and thus provide an additional level of fault tolerance as well as dynamic load balancing and resource management as discussed in greater detail hereinafter.

Thus, the configuration of the advanced system architecture of the present invention provides a high degree of flexibility to manage, control, enhance and facilitate the radio resource efficiency, usage, availability, and overall performance of the distributed wireless network. The present invention enables specialized applications and enhancements including Flexible Simulcast, automatic traffic load-balancing, network and radio resource optimization, network calibration, autonomous/assisted commissioning, carrier pooling, automatic frequency selection, radio frequency carrier placement, traffic monitoring, traffic tagging, and indoor location determination using pilot beacons. The present invention can also serve multiple operators, multi-mode radios (modulation-independent) and multi-frequency bands per operator to increase the efficiency and traffic capacity of the operators' wireless networks.

Further the present invention provides a high degree of dynamic flexibility, supports dynamic re-arrangements, and provides a low life cycle cost. This advanced system architecture enables deployment of DAS networks using fewer DAS transport facilities to reduce costs, while providing self-healing features. The present invention also offers redundancy and enhanced system availability.

It is an object of the present invention to provide Flexible Simulcast capabilities, as disclosed in U.S. Provisional Application S.N. 61/382,836, entitled "Remotely Reconfigurable Distributed Antenna System and Methods," filed September 14, 2010,attached as Appendix A, in a high-availability ring configuration using, for example, optical fiber transport. As discussed above, the ring configuration insures that a break in any optical fiber cable will not shut down the daisy-chained network, because the downlink and uplink signals can be rerouted around the cable break to the respective DRUs.

It is a further object of the present invention to balance the bidirectional data rate on the optical fibers so as to increase the maximum achievable data rate during operation on the ring network of DRUs.

It is a further object of the present invention to provide higher transport network capacity in the event the data transport is asymmetrical between the downlink and uplink, as is typically the case for mobile broadband networks.

It is a further object of the present invention to provide an adaptive and automatic control for optimizing the transport media capacity on the ring.

It is a further object of the present invention to provide a method of summing co-channel users' uplink signals in the DRU daisy chain.

Applications of the present invention are suitable to be employed with distributed base stations, distributed antenna systems, distributed repeaters, mobile equipment and wireless terminals, portable wireless devices, and other wireless communication systems such as microwave and satellite communications. The present invention is also field upgradable through a link such as an Ethernet connection to a remote computing center.

Appendix I is a glossary of terms used herein, including acronyms.

### THE FIGURES

Further objects and advantages of the present invention can be more fully understood from the following detailed description taken in conjunction with the accompanying drawings in which:
Figure 1 is a block diagram showing the basic structure and an example of a unidirectional, channelized downlink transport, one ring scenario based on having one DAU and four DRUs.
Figure 2 is a block diagram showing the basic structure and an example of a unidirectional, channelized uplink transport, one ring scenario based on having one DAU and four DRUs.
Figure 3 is a block diagram showing the basic structure and an example of a unidirectional, channelized uplink transport, two ring scenario based on having one DAU and eight DRUs.
Figure 4 is a block diagram showing the basic structure and an example of a unidirectional channelized uplink or downlink transport. This example of a five ring scenario comprises two DAUs and twenty DRUs.
Figure 5 illustrates an embodiment of a cellular network system employing multiple DRUs .
Figure 6 illustrates a multi-band system employing six different services operating in different frequency channels with multiple DRUs according to the present invention.
Figure 7 illustrates in block diagram form the interaction between the DAU embedded software control module and the DRU embedded software control module.
Figure 8 illustrates in block diagram form an embodiment of a DAS according to a claimed aspect of the invention, including daisy-chained DAU's.

### DETAILED DESCRIPTION OF THE INVENTION

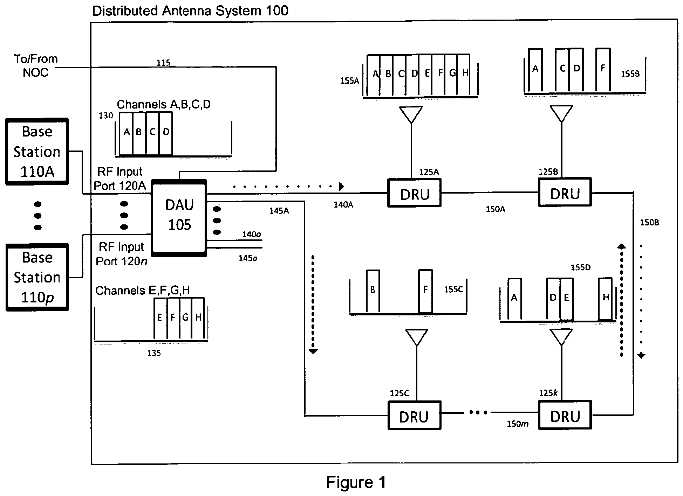

The present invention is a novel Reconfigurable Distributed Antenna System that provides a high degree of flexibility to manage, control, reconfigure, enhance and facilitate the radio resource efficiency, usage and overall performance of the distributed wireless network. Figure 1 illustrates an embodiment of the Distributed Antenna System 100 in accordance with the present invention. The system employs a Digital Access Unit functionality 105 (hereinafter "DAU"). The DAU 105 serves as an interface between associated base stations (BTS) 110A-B and a plurality of digital remote units (DRU) 125A-n, although only four DRU's are shown in Figure 1. In the present description, "DRU" will be used interchangeably with Remote Radio Head Unit, or "RRU", because of the similarity of the functions discussed herein, although those skilled in the art will recognize that a DRU communicates with a DAU, whereas an RRU communicates with a base station. In addition, those skilled in the art will recognize that a DAU is monitored and controlled by a remote network operations center ("NOC"), as indicated at bidirectional link 115 in Figure 1. Such links are typically Ethernet connections or external modems, but can be any form of link suitable for remote monitoring and control. The NOC has the capability to remotely configure the DAU parameter settings which in turn configures the DRU's parameter settings. The NOC can request information from the DAUs. The DAUs can subsequently request information from the DRUs. The information requested includes but is not limited to uplink power, downlink power, optical error rate, gain settings, active carriers, etc.

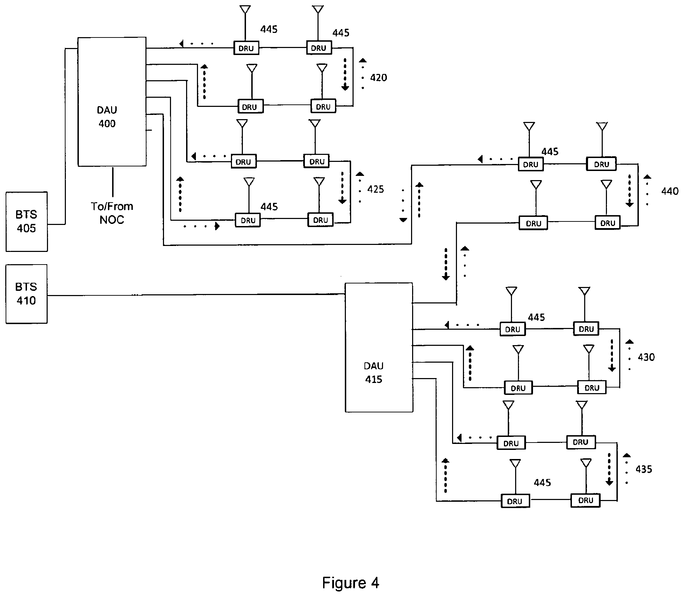

For the downlink (DL) path, RF input signals 120A through 120*n* are received at the DAU 105 from one or more base station units (BTS) indicated at 110A through 110p. The RF input signals are separately down-converted, digitized, and converted to baseband (using a Digital Down-Converter) by the DAU. Data streams are then I/Q mapped and framed and specific parallel data streams are then independently serialized and translated to optical signals using pluggable SFP modules, again by the DAU 105. The independently serialized, parallel data streams are then delivered to different DRU's 125A-125*k*, typically over optical fiber cable arranged, in at least some embodiments, in a ring configuration indicated at connection pairs 140A-145A, or, in other embodiments, a daisy chain configuration. In addition, each DAU can support a plurality of rings with associated DRU's, where the additional rings are indicated by fiber optic pairs up through 140*o-*145*o*.. It will be appreciated by those skilled in the art that the number of RF inputs, DAU's and DRU's and rings is limited only by network performance factors, such as delay. In addition, as discussed in connection with Figure 4 herein, the DAS can be further extended by using a ring or daisy-chain of DAU's, each of which supports an arrangement of DRU's and rings as shown in Figure 1.

One function of the DAU 105 is to determine the direction in which downlinked channels are propagated around the ring. As just one example, the embodiment shown in Figure 1 is configured to have downlink channels A, B, C and D propagate in a first direction, for example clockwise, and channels E, F, G, and H propagate in the counter direction, although it will be understood that the number of channels propagating in each direction need not be equal, nor adjacent, nor sequential. Likewise, the number of channels received at each DRU is assigned by the DAU and need not be equal, adjacent or sequential, but instead will typically be any configuration that optimizes network utilization.

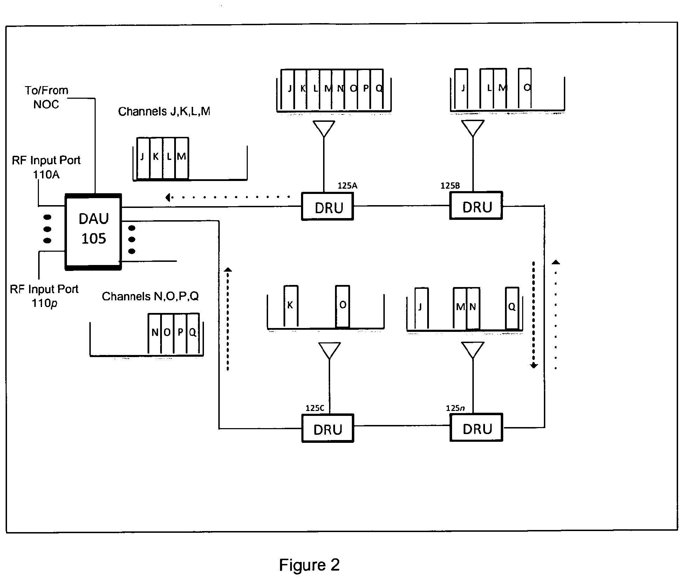

Referring next to Figure 2, an embodiment of an uplink (UL) path in accordance with the invention can be better appreciated. Channels received at the antenna associated with each DRU are converted into optical signals by each DRU 125A-125k. Optical signals received from the DRU's are deserialized and de-framed by the DAU 105, and are also up-converted digitally using a Digital Up-Converter implemented within the DAU 105. Each data stream is then independently converted to the analog domain and up-converted to the appropriate RF frequency band, still within the DAU 105 in the illustrated implementation, although this functionality can be separate. The RF signals are then delivered to the appropriate one of a plurality of BTS' 110A-110*p*. As with the arrangement shown in Figure 1, the direction of propagation of each channel is controlled by the DAU, with some channels propagating in a clockwise direction and others in a counterclockwise direction. Also as discussed in connection with Figure 1, while adjacent channels are shown as propagating in the same direction in Figure 2, this is not required and any channel can be selected to propagate in either direction.

Referring again to Figure 1, it will be appreciated by those skilled in the art that, in some implementations of a DAS, more than one carrier can exist in each channel, and, as such, a DRU may receive a channel comprising a signal containing two or more carriers, or a wireless operator may have more than one RF carrier per channel allocated to a single base station. This is referred to as a "composite signal". The manner in which a composite downlink signal is managed by the present invention can be better understood with reference to Figure 1. In such instances, the DAU will receive a composite downlink input signal 130 from, e.g., a first base station 110A belonging to one wireless operator, enters the DAU 105 at the RF input port 120A. Composite signal 130 comprises carriers A-D. A second composite downlink input signal from e.g., a *p*th base station 110*p* belonging to the same wireless operator enters DAU1 at the DAU1 RF input port 120n. Composite signal 135 comprises carriers E-H. The functionality of the DAU 105, and DRU's 125A-125k, respectively, are explained in detail in U.S. Provisional Application S.N. 61/374,593, entitled "Neutral Host Architecture for a Distributed Antenna System," filed August 17, 201 0.

One optical output of DAU 105 is fed to DRU 125A, via bidirectional optical cable 140A. A second optical output of DAU 105 is fed via bidirectional optical cable 145A to DRU3. Similarly, bidirectional optical cables 150, 155 and 160 connect DRU's 125A-n in a ring configuration, such that DRU 125A connects to DRU 125B via cable 150A, DRU 125B connects to DRU 125n via cable 150B, and DRU 125k connects to DRU 125C, or the *k*th-1 DRU, via cable 150*m*. This connection facilitates networking of DAU 105, which means that all of Carriers A-H are available within DAU 105 to transport data to DRU's 125A-*k* depending on software settings within the networked DAU system. Depending upon the embodiment, the software settings within DRU 125A are configured either manually or automatically, such that carriers A-H are present in the downlink output signal 155A at the antenna port of DRU 125A. The presence of all eight carriers means that DRU 125A is potentially able to access the full capacity of both base stations feeding DAU 105. A possible application for DRU125A is a cafeteria in an enterprise building during the lunch hour where a large number of wireless subscribers are gathered.

DRU 125B is fed by a second optical port of DRU 125A via bidirectional optical cable 150A. The optical cable 150A performs the function of daisy chaining DRU 125A with DRU125B. As with DRU 125A, the software settings within DRU 125B are configured either manually or automatically such that Carriers A, C, D and F are present in downlink output signal 155B at the antenna port of DRU 125B. The capacity of DRU 125B is set to a much lower value than DRU 125A by virtue of its specific channel settings as controlled by DAU 105. The individual Digital Remote Units have integrated frequency selective DUCs and DDCs with gain control for each carrier. The DAU's can remotely turn on and off the individual carriers via the gain control parameters.

In a similar manner as described previously for DRU 125A, the software settings within DRU 125C are configured either manually or automatically such that Carriers B and F are present in downlink output signal 155C at the antenna port of DRU 125C. Compared to the downlink signal 155B at the antenna port of DRU 125B, the capacity of DRU 125C, which is also configured via its software settings, is much less than the capacity of DRU 125B. DRU 125n is fed by the optical cable 150m connected to the second optical port of the n^{th}-1 DRU, shown for simplicity in Figure 1 as DRU 125C. The software settings within DRU 125n are configured either manually or automatically such that carriers A, D, E and H are present in downlink output signal 155D at the antenna port of DRU 125n. Typically, the capacity of DRU 125n is set to a much lower value than DRU 125A, however, the relative capacity settings of each of DRU's 125A-n can be adjusted dynamically to meet the capacity needs within the coverage zones determined by the physical positions of antennas connected to those DRU's. As noted above, the ring connection is completed by interconnecting DRU 125B and DRU 125n through optical cable 150B. The ring configuration insures that any optical cable breaks will not shut down the daisy chained network. The downlink and uplink signals will be rerouted around the cable break to the respective DRUs.

The present invention facilitates conversion and transport of several discrete relatively narrow RF bandwidths. This approach allows conversion of only those multiple specific relatively narrow bandwidths which carry useful or specific information. This approach also allows more efficient use of the available optical fiber transport bandwidth for neutral host applications, and allows transport of more individual operators' band segments over the optical fiber. As disclosed in U.S. Provisional Application S.N. 61/374593, entitled "Neutral Host Architecture for a Distributed Antenna System," filed August 17, 2010 together with U.S. Provisional Application S.N. 61/382,836, entitled "Remotely Reconfigurable Distributed Antenna System and Methods", filed September 14, 2010, both assigned to the assignee of the present invention, and also referring to Figure 1 of the instant patent application, Digital Up Converters located within the DRU can be dynamically reconfigured as the result of commands from the NOC to transport from the DAU input to any specific DRU output any specific narrow frequency band or bands, RF carriers or RF channels which are available at the respective RF input port of either DAU. This capability is illustrated in Figure 1 where only specific frequency bands or RF carriers appear at the output of a given DRU. More specifically, through commands received from the NOC, the FPGA's in the DAU and one or more of the associated DRU's can be reprogrammed or reconfigured to convert and transport only the desired narrow bandwidths.

A related capability of the present invention is that not only can the Digital Up Converters located within each DRU be configured to transport any specific narrow frequency band from the DAU input to any specific DRU output, but also the Digital Up Converters within each DRU can be configured to transport any specific time slot or time slots of each carrier from the DAU input to any specific DRU output. The carriers and time slots are monitored by the DAU by filtering the signals and performing power detection of the individual time slots, which information can be conveyed to the NOC as desired. Then, as with the Digital Up Converters, the Field Programmable Gate Arrays (FPGA) in the DAU or DRU can be dynamically reconfigured by commands received from the NOC in a manner analogous to software programmability. The DAU detects which carriers and corresponding time slots are active. This information is relayed to the individual DRUs via the management control and monitoring protocol software. This information is then used, as appropriate, by the DRUs for turning off and on individual carriers and their corresponding time slots.

Data transport between the Base Station and the subscribers is typically asymmetrical, whereby the downlink data rate is higher than the uplink rate. The ring network configuration of Daisy Chained DRUs can exploit this data rate asymmetry to maximize the data transport on the optical fibers 150A-150*m*.

The present invention balances the bidirectional data rate on the optical fibers so as to increase the maximum achievable data rate on the ring network of DRUs. The individual downlink channels are transmitted in a unidirectional sense along the ring network. Referring to Figure 1, downlink channels A, B, C, and D are transmitted in a clockwise sense around the ring of DRU's 125A-*k*. On the other hand, downlink channels E, F, G and H are transmitted in a counterclockwise sense around the ring of DRU's. Referring to Figure 2, the uplink channels J, K, L and M are transmitted in a counterclockwise sense whereas uplink channels N, O, P and Q are transmitted in a clockwise sense around the ring of DRUs. If the downlink and uplink data rates were the same, there would be no advantage in the transport mechanism. However, if the data transport is asymmetrical between the downlink and uplink then a significant advantage can be gained. For example, for a factor of two difference between the downlink and uplink data rates, a 4/3 factor increase in data transport can be achieved. The larger the asymmetry between the downlink and uplink data rates, the larger will be the increase in data transport using the unidirectional channel transport mechanism around the ring.

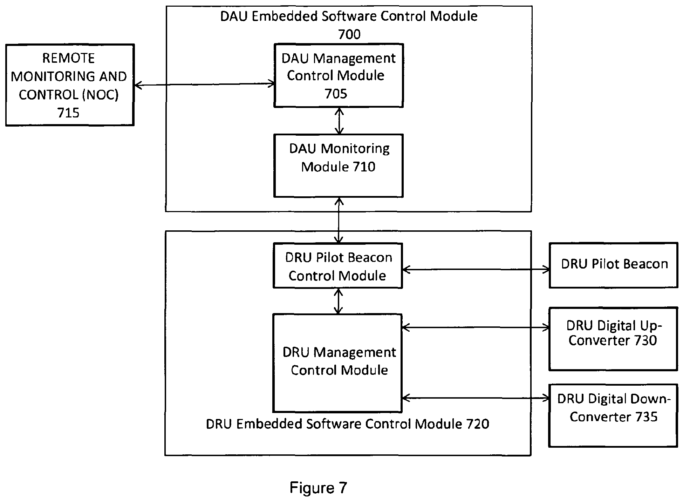

Referring again to Figure 1, a further embodiment in accordance with another aspect of the present invention may be better understood. In the event that there is a significant change in asymmetry between the downlink and uplink data rates and/or if there is a change in channel complement at the BTS, the Management Control module [discussed in connection with Figure 7 herein] which is typically comprised within each DAU is able to automatically and adaptively re-allocate data transport resources on the clockwise direction of the ring and on the counter-clockwise direction of the ring to maximize the overall transport capacity. As stated previously, the larger the degree of asymmetry between uplink and downlink data rates for a particular DAU, the higher the increase in data transport using the unidirectional channel transport mechanism around the ring. If there is more than one DAU present, in an embodiment one DAU is designated a Master DAU by the NOC, and the Management Control module located in the Master DAU makes decisions to optimize the overall transport capacity. In the event the master DAU fails, the NOC can designate another DAU as master. Alternatively, any suitable failover algorithm can be implemented.

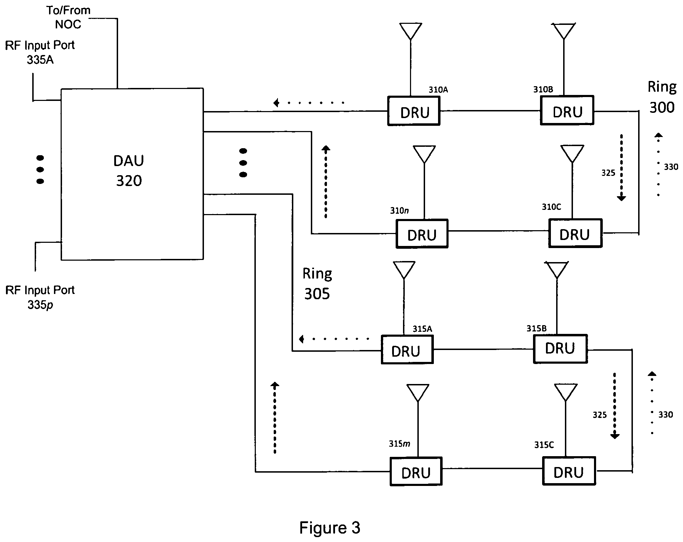

Referring to Figure 3, an alternative embodiment of the present invention wherein a single DAU controls a plurality of rings, each comprising a plurality of daisy-chained DRU's, can be better understood. In Figure 3, two daisy-chained rings, indicated at 300 and 305, are shown although the number of rings could be greater and is determined mainly as a matter of design preference up to limits imposed by network performance. The rings each link a plurality of DRU's 310A-*n* and 315A-*m*, to a single DAU 320. The directional flow of the data transport is shown as the dashed lines 325 and dotted lines 330. The downlink channels available from the plurality of DRU's are divided into two subsets which flow in opposite directions around the two daisy-chained rings. The uplink channels are transported in a similar fashion. The channels are grouped into the two subsets so as to maximize the data transport to and from the DRUs. The DAU in turn communicates with one or more BTS's via RF Ports 335A-*p*.

Heuristic algorithms may be used to allocate RF channel data in a Dual-ring DAS. For Figure 3, there are two fibre rings R1, R2 (clockwise and counter clockwise) and a set T of *n*≥2 independent RF channels Ki, 1*≤i≤n* (including uplink and downlink). A channel Ki requires a bandwidth of b(Ki) to transport on a fibre ring. A time-bounded algorithm exists which obtains a schedule having the optimal bandwidth allocation (i.e. the maximum aggregate bandwidth of each ring is as small as possible). A large number of advanced heuristic algorithms have been developed to solve such scheduling optimization problems. Some examples are genetic algorithm, evolutionary algorithm, greedy search, Tabu search, harmony search, simulated annealing, ant colony optimization, etc. For purposes of simplicity and clarity, a simple heuristic algorithm for two rings is described here, although the number of rings is not limited to two.

The algorithm begins by sorting the channels K*i* decreasingly by bandwidth b(K*i*). Then it schedules the channel in such a way that each channel is assigned to the ring which has the smaller aggregate bandwidth. The formal description of the algorithm follows.

Input: T = set of *n* independent channels K*i* with required bandwidth b(K*i*), 1≤ *i* ≤*n*.

Output: L₁, L₂ and D₁, D₂. L*j* is the set of channels schedule on ring R*j* , and D*ⱼ* is the maximum aggregate bandwidth of ring R*j*, D*j* = (Σb(J), JεL*ⱼ*), 1≤*j*≤2.

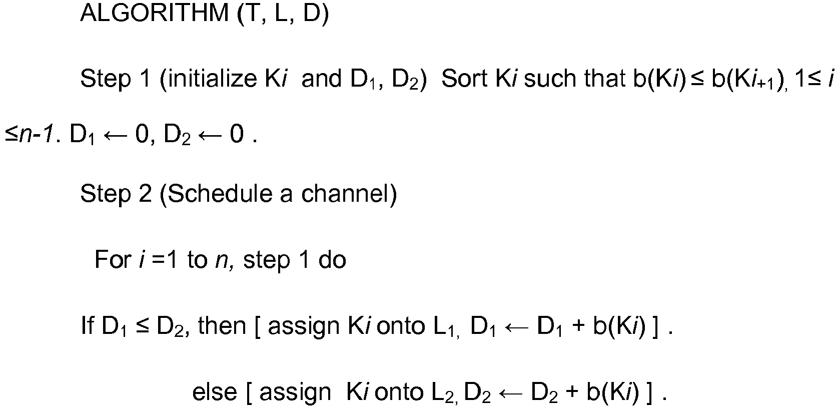

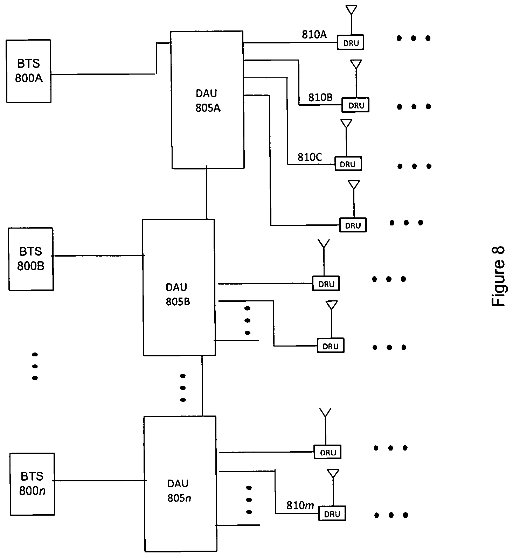

Referring next to Figure 4, a still further an alternative embodiment of the present invention may be understood. The arrangement illustrated in Figure 1 comprised downlink signals from two separate base stations belonging to the same wireless operator entering the DAU 105 at input ports 110A and 110p, respectively. In the embodiment of Figure 4, a first composite signal enters a first DAU 400 at that DAU's RF input port from a base station 405, and a second composite downlink input signal from, e.g., a second base station 410 belonging to a different wireless operator enters DAU 415 at that second DAU's RF input port. DAU 400 directly supports two rings 420 and 425, DAU 415 directly supports two rings 430 and 435, and a ring 440 is shared between DAU 400 and DAU 405. Each of the rings comprises daisy-chained DRU's generally indicated at 445 and connected via, for example, fiber optic links, as discussed in connection with Figure 1. It will be noted that channels A are transported in the opposite sense as channels B. The downlink channels in subset A are transported counterclockwise around each ring, whereas the channels in subset B are transported in a clockwise sense around each ring. In this embodiment, signals belonging to both the first operator and the second operator are converted and transported to the DRU's 445 on ring 440 because DAU 400 and DAU 405 are daisy-chained through the fiber optic cable 440. This embodiment provides an example of a neutral host wireless system, where multiple wireless operators share a common infrastructure comprised of DAU 400, DAU 415, and DRU's 445. All the previously mentioned features and advantages accrue to each of the two wireless operators. It will further be appreciated that, while Figure 4 illustrates only two DAU's linked in daisy-chain style, it is possible to daisy chain a larger plurality of DAU's, and the daisy-chained DAU's can also be configured in a ring configuration similar to the manner in which the DRU's are connected. This arranged is illustrated in Figure 8, below.

As disclosed in U.S. Provisional Application S.N. 61/374,593, entitled "Neutral Host Architecture for a Distributed Antenna System," filed August 17, 2010 and again referring to Figure 1 of the instant patent application, the Digital Up Converters present in the DRU's of the present invention can be programmed to process various signal formats and modulation types including FDMA, CDMA, TDMA, OFDMA and others. Also, the Digital Up Converters present in the respective DRUs can be programmed to operate with signals to be transmitted within various frequency bands subject to the capabilities and limitations of the system architecture disclosed in U.S. Provisional Application S.N. 61/374593, mentioned above. In one embodiment of the present invention where a wideband CDMA signal is present within, e.g., the bandwidth corresponding to a first carrier at the input port to DAU 105, the transmitted signal at the antenna ports of DRU 125A, DRU 125B and DRU*k* will be a wideband CDMA signal which is virtually identical to the signal present within the bandwidth corresponding to that first carrier at the input port to DAU 105.

As disclosed in U.S. Provisional Application S.N. 61/374,593, again identified above, and also referring to Figure 1 of the instant patent application, it is to be understood that the Digital Up Converters present in the respective DRUs can be programmed to transmit any desired composite signal format to each of the respective DRU antenna ports. As an example, the Digital Up Converters present in DRU 125A and DRU 125B can be dynamically software-reconfigured as described previously so that the signal present at the antenna port of DRU 125A would correspond to the spectral profile shown in Figure 1 as 155A and also that the signal present at the antenna port of DRU 125B would correspond to the spectral profile shown in Figure 1 as 155B. The application for such a dynamic re-arrangement of DRU capacity would be e.g., if a company meeting were suddenly convened in the area of the enterprise corresponding to the coverage area of DRU 125B.

Referring again to Figure 2, another embodiment of the Distributed Antenna System of the present invention can be better understood. As disclosed in the aforementioned U.S. Provisional Application S.N. 61/374,593, and also as shown in Figure 2, the optical ring transport mechanism can be implemented with regard to uplink signals. As discussed previously with regard to downlink signals and by referring to Figure 1, the uplink system shown in Figure 2 is mainly comprised of DAU 105, together with DRU's 125A-125k. In a manner similar to the downlink operation explained by referring to Figure 1, the operation of the uplink system shown in Figure 2 can be understood as follows.

The Digital Down Converters present in each of DRU's 125A-k are dynamically software-configured as described previously so that uplink signals of the appropriate desired signal format(s) present at the receive antenna ports of the respective DRU's 125A-125k are selected based on the desired uplink band(s) to be processed and filtered, converted and transported to the appropriate uplink output port of DAU 105. The DAU and DRUs frame the individual data packets corresponding to their respective radio signature using the Common Public Interface Standard (CPRI). Other Interface standards are applicable provided they uniquely identify data packets with respective DRUs. Header information is transmitted along with the data packet which indentifies the DRU and DAU that corresponds to the individual data packet.

In one example for the embodiment shown in Figure 2, DRU's 125A and 125C are configured to receive uplink signals within the Channel K bandwidth, whereas DRU 125B and DRU 125n are both configured to reject uplink signals within the Channel K bandwidth. When DRU 125C receives a strong enough signal at its receive antenna port within the Channel K bandwidth to be properly filtered and processed, the Digital Down Converters within DRU 125C facilitate processing and conversion. Similarly, when DRU 125A receives a strong enough signal at its receive antenna port within the Channel K bandwidth to be properly filtered and processed, the Digital Down Converters within DRU 125A facilitate processing and conversion. The signals from DRU 125A and DRU 125C are combined based on the active signal combining algorithm, and are fed to the base station connected to the uplink output port of DAU 105. The term simulcast is frequently used to describe the operation of DRU125A and DRU 125C with regard to uplink and downlink signals within Channel K bandwidth. The term Flexible Simulcast refers to the fact that the present invention supports dynamic and/or manual rearrangement of which specific DRU are involved in the signal combining process for each Channel bandwidth.

Referring still to Figure 2, the Digital Down Converters present in DRU 125A are configured to receive and process signals within Channel J-Q bandwidths. The Digital Down Converters present in DRU 125B are configured to receive and process signals within Channel J, L, M and O bandwidths. The Digital Down Converters present in DRU 125C are configured to receive and process signals within Channel K and O bandwidths. The Digital Down Converters present in DRU 125n are configured to receive and process signals within Channel J, M, N and Q bandwidths. The respective high-speed digital signals resulting from processing performed within each of the four DRU are routed to the DAU. As described previously, the uplink signals from the four DRUs are combined within the respective DAU corresponding to each base station.

In summary, the Reconfigurable Distributed Antenna System of the present invention described herein efficiently conserves resources and reduces costs. The reconfigurable system is adaptive or manually field-programmable, since the algorithms can be adjusted like software in the digital processor at any time.

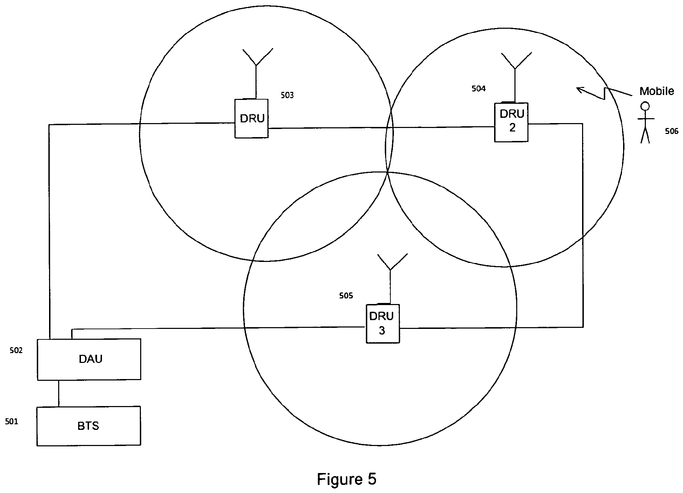

Referring next to Figure 5, a alternative embodiment of the present invention may be better understood. Each DRU has a coverage radius that can be adjusted based on the power transmission from that particular remote unit. The DAU controls the various DRU's transmission power and can optimize the overall coverage zone. In the illustrated embodiment, DAU 502, again under the control of a NOC (not shown), is associated with a base station 501 and in turn interfaces with three DRU's 503, 504 and 505. A user 506 with a mobile device is provided relatively uniform coverage throughout the area covered by the three DRU's.

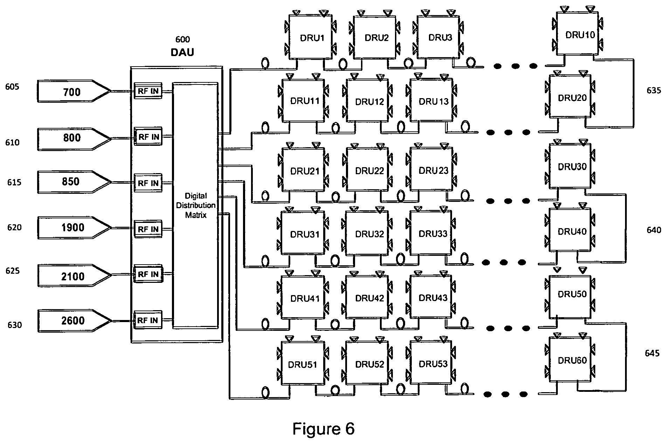

Referring next to Figure 6, a still further alternative embodiment may be better appreciated. The input frequency bands 605-630 (here denoted as six frequency bands at 700, 800, 850, 1900, 2100 and 2600 MHz) are input into the DAU 600 from the BTS's (not shown). The DAU includes, among other functionalities discussed herein, an RF IN portion for each band, and a digital distribution matrix for distributing the frequency bands to a plurality of DRU's, indicated as DRU1-DRU60, daisy-chained along three separate rings 635, 640 and 645 for achieving the desired coverage. The frequency bands are transported to either all or a subset of DRUs. The particular number of frequency bands, DAU's, DRU's and rings is exemplary only, and can, in practice, be any number appropriate to the performance capabilities and needs of the network.

Referring next to Figure 7, the software embedded in the DAU and DRU, which controls the operation of keys functions of these devices, can be better understood. In particular, the DAU embedded software control module 700 comprises a DAU Management Control Module 705 and a DAU monitoring module 710. The DAU Management Control Module 705 communicates with the NOC 715, and also the DAU monitoring module 710. One such key function is determining and/or setting the appropriate amount of radio resources (such as RF carriers, CDMA codes or TDMA time slots) assigned to a particular DRU or group of DRUs to meet desired capacity and throughput objectives. As noted previously, the NOC 715 monitors the DAS operation and sends commands to the DAU's for configuring various functions of the DRU's as well as the DAU, in at least some embodiments.

The DAU Monitoring module, in addition to other functions, detects which carriers and corresponding time slots are active for each DRU. The DAU Management Control module communicates with the DRU Embedded Software Control module 720 over a fiber optic link control channel via a control protocol. In an embodiment, the control protocol comprises headers together with packets of data, such that both control information and data are transmitted to the DRU's together as a message. DRU functions or features that the header would control in the DRU are typically implementation specific and can include, among other things, measuring uplink and downlink power, measuring gain of uplink and downlink, and monitoring alarms in the DRU.

In turn, the DRU Management Control module 725 within the DRU Embedded Software Control Module sets the individual parameters of all the DRU Digital Up-Converters 730 to enable or disable specific radio resources from being transmitted by a particular DRU or group of DRUs, and also sets the individual parameters of all the DRU Digital Down-Converters 735 to enable or disable specific radio resources from being transmitted by a particular DRU or group of DRUs. In addition, the DRU Embedded Software Control Module comprises a DRU Pilot Beacon Control Module 740, which communicates with a DRU Pilot Beacon 745.

Referring next to Figure 8, a claimed embodiment of a daisy-chained configuration of DAU's is illustrated, together with a daisy-chained configuration of DRU's. In an embodiment, a plurality of base stations 800A-800*n* are each associated with one of DAU's 805A-*n*. The DAU's are daisy-chained, and each DAU communicates with one or more daisy-chains 810A-810*m* of DRU's which may or may not be arranged in a ring configuration. It will be appreciated that the DAU's can also be configured in a ring configuration, as discussed above.

An algorithm operating within the DAU Monitoring module which detects which carriers and corresponding time slots for each carrier are active for each DRU provides information to the DAU Management Control module to help identify when, e.g., a particular downlink carrier is loaded by a percentage greater than a predetermined threshold whose value is communicated to the DAU Management Control module by the DAU's Remote Monitoring and Control function 715. If that occurs, the DAU Management Control module can adaptively modify the system configuration to begin to deploy, typically although not necessarily slowly, additional radio resources (such as RF carriers, CDMA codes or TDMA time slots) for use by a particular DRU which need those radio resources within its coverage area. At the same time, usually the DAU Management Control module adaptively modifies the system configuration to begin to remove, again typically slowly, certain radio resources (such as RF carriers, CDMA codes or TDMA time slots) for use by a particular DRU where that DRU no longer needs those radio resources within its coverage area.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A distributed antenna system (100) for routing and switching signals, the system comprising:
a plurality of digital remote units, DRUs, (810A-810m) each configured to transmit one or more downlink channels and to receive one or more uplink channels;
a first digital access unit, DAU, (805A) configured to communicate with at least two (810A-810C) of the plurality of DRUs and at least one base station, BTS, (800A), wherein the first DAU (805A) is configured to determine an amount of radio resources assigned to the plurality of DRUs;
a second DAU (805B) configured to communicate with at least two others of the plurality of DRUs, at least one second BTS (800B) and the first DAU (805A), wherein the second DAU (805B) is configured to determine an amount of radio resources assigned to the at least two others of the plurality of DRUs,
wherein each DAU serves as an interface between associated BTSs and the respective plurality of DRUs, and
a number of radio resources received at each DRU is assigned by the corresponding DAU.

2. The system of claim 1, being configured for performing the method of one of claims 7 to 13.

3. The system of claim 1, wherein the first and the second DAUs (805A, 805B) are connected in a daisy-chained configuration.

4. The system of claim 1, wherein the first and the second DAUs (805A, 805B) is each adapted to support a plurality of rings with associated DRUs (810A-810C) of the plurality of DRUs (810A-810m).

5. The system of claim 1, wherein ones (810A-810C) of the plurality of DRUs (810A-810m) are configured in a daisy-chained ring.

6. The system of claim 1, wherein the first and the second DAUs (805A, 805B) is each adapted to control packet traffic for the associated plurality of DRUs (810A-810m).

7. A method for routing and switching signals with a plurality of digital remote units, DRUs, (810A-810m), each configured to transmit one or more downlink channels and to receive one or more uplink channels, the method comprising:
configuring a first digital access unit, DAU, (805A) to communicate with at least two (810A-810C) of the plurality of DRUs and at least one base station, BTS, (800A), wherein the first DAU (805A) is configured to determine an amount of radio resources assigned to the plurality of DRUs;
configuring a second DAU (805B) to communicate with at least two others of the plurality of DRUs, at least one second BTS (800B) and the first DAU (805A), wherein the second DAU (805B) is configured to determine an amount of radio resources assigned to the at least two others of the plurality of DRUs,
wherein each DAU serves as an interface between associated BTSs and the respective plurality of DRUs, and
a number of radio resources received at each DRU is assigned by the corresponding DAU.

8. The method of claim 7, wherein a first DRU (810A) transmits and receives a different number of channels than a second DRU.

9. The method of claim 8, wherein the first DRU (810A) transmits and receives a greater number of channels than the second DRU.

10. The method of claim 7, wherein at least one DAU of the first and second DAUs (805A, 805B) is further configured to communicate at a plurality of frequency bands.

11. The method of claim 7, further comprising changing a number of channels received and transmitted by at least one of the plurality of DRUs (810A-810m).

12. The method of claim 11, wherein changing the number of channels received and transmitted comprises determining whether the at least one of the plurality of DRUs (810A-810m) carries a predetermined traffic load greater than a predetermined threshold.

13. The method of claim 7, further comprising:
determining an amount of radio resources associated with the plurality of DRUs (810A-810m); and
enabling or disabling radio resources associated with at least one of the plurality of DRUs.

## Patentansprüche

1. Verteiltes Antennensystem (100) zum Routen und Schalten von Signalen, wobei das System Folgendes umfasst:
eine Mehrzahl von digitalen entfernten Einheiten, DRUs, (810A-810m), die jeweils konfiguriert sind, um einen oder mehrere Downlinkkanäle zu senden und einen oder mehrere Uplinkkanäle zu empfangen;
eine erste digitale Zugriffseinheit, DAU, (805A), die konfiguriert ist, um mit mindestens zwei (810A-810C) aus der Mehrzahl von DRUs und mindestens einer Basisstation, BTS, (800A) zu kommunizieren, wobei
die erste DAU (805A) konfiguriert ist, um eine Menge an Funkressourcen zu bestimmen, die der Mehrzahl von DRUs zugeordnet sind;
eine zweite DAU (805B), die konfiguriert ist, um mit mindestens zwei anderen aus der Mehrzahl von DRUs, mindestens einer zweiten BTS (800B) und der ersten DAU (805A) zu kommunizieren, wobei die zweite DAU (805B) konfiguriert ist, um eine Menge an Funkressourcen zu bestimmen, die den mindestens zwei anderen der Mehrzahl von DRUs zugeordnet sind,
wobei jede DAU als Schnittstelle zwischen zugehörigen BTSs und der jeweiligen Mehrzahl von DRUs dient, und
eine Anzahl von Funkressourcen, die an jeder DRU empfangen werden, von der entsprechenden DAU zugewiesen wird.

2. System nach Anspruch 1, das zur Durchführung des Verfahrens nach einem der Ansprüche 7 bis 13 konfiguriert ist.

3. System nach Anspruch 1, wobei die erste und die zweite DAU (805A, 805B) in einer Daisy-Chain-Konfiguration verbunden sind.

4. System nach Anspruch 1, wobei die erste und die zweite DAUs (805A, 805B) jeweils ausgelegt sind, um eine Mehrzahl von Ringen mit zugehörigen DRUs (810A-810C) aus der Mehrzahl von DRUs (810A-810m) zu tragen.

5. System nach Anspruch 1, wobei einzelne (810A-810C) aus der Mehrzahl von DRUs (810A-810m) in einem Daisy-Chain-Ring konfiguriert sind.

6. System nach Anspruch 1, wobei die erste und die zweite DAU (805A, 805B) jeweils dazu ausgelegt sind, den Paketverkehr für die zugehörige Mehrzahl von DRUs (810A-810m) zu steuern.

7. Verfahren zum Routing und Schalten von Signalen mit einer Mehrzahl von digitalen entfernten Einheiten, DRUs, (810A-810m), die jeweils konfiguriert sind, um einen oder mehrere Downlinkkanäle senden und einen oder mehrere Uplinkkanäle zu empfangen, wobei das Verfahren Folgendes umfasst:
Konfigurieren einer ersten digitalen Zugangseinheit, DAU, (805A), um mit mindestens zwei (810A-81 0C) aus der Mehrzahl von DRUs und mindestens einer Basisstation, BTS, (800A) zu kommunizieren, wobei die erste DAU (805A) konfiguriert ist, um eine Menge an Funkressourcen zu bestimmen, die der Mehrzahl von DRUs zugeordnet sind;
Konfigurieren einer zweiten DAU (805B), um mit mindestens mit zwei anderen aus der Mehrzahl von DRUs, mindestens einer zweiten BTS (800B) und der ersten DAU (805A) zu kommunizieren, wobei die zweite DAU (805B) konfiguriert ist, um eine Menge von Funkressourcen zu bestimmen, die den mindestens zwei anderen der Mehrzahl von DRUs zugeordnet sind,
wobei jede DAU als Schnittstelle zwischen zugehörigen BTSs und der jeweiligen Mehrzahl von DRUs dient, und
eine Anzahl von an jeder DRU empfangenen Funkressourcen von der entsprechenden DAU zugewiesen wird.

8. Verfahren nach Anspruch 7, wobei eine erste DRU (81 OA) eine unterschiedliche Anzahl von Kanälen als eine zweite DRU sendet und empfängt.

9. Verfahren nach Anspruch 8, wobei die erste DRU (810A) eine größere Anzahl von Kanälen als die zweite DRU sendet und empfängt.

10. Verfahren nach Anspruch 7, wobei mindestens eine DAU der ersten und zweiten DAU (805A, 805B) ferner konfiguriert ist, um auf einer Mehrzahl von Frequenzbändern zu kommunizieren.

11. Verfahren nach Anspruch 7, das ferner das Ändern einer Anzahl von Kanälen umfasst, die von mindestens einer aus der Mehrzahl von DRUs (810A-810m) empfangen und gesendet werden.

12. Verfahren nach Anspruch 11, wobei das Ändern der Anzahl von empfangenen und gesendeten Kanäle das Bestimmen umfasst, ob die mindestens eine aus der Mehrzahl von DRUs (810A-810m) eine vorbestimmte Verkehrslast trägt, die größer als ein vorbestimmter Schwellenwert ist.

13. Verfahren nach Anspruch 7, ferner umfassend:
Bestimmen einer Menge von Funkressourcen, die der Mehrzahl von DRUs (810A-810m) zugehörig sind; und
Aktivieren oder Deaktivieren von Funkressourcen, die mindestens einer aus der Mehrzahl von DRUs zugehörig sind.

## Revendications

1. Système d'antennes distribuées (100) pour l'acheminement et la commutation de signaux, le système comprenant :
une pluralité d'unités numériques distantes, UND, (810A-810m) configurées chacune pour transmettre un ou plusieurs canaux de liaison descendante et pour recevoir un ou plusieurs canaux de liaison montante ;
une première unité d'accès numérique (UAN) (805A) configurée pour communiquer avec au moins deux (810A-810C) de la pluralité de UNDs et au moins une station de base (BTS) (800A), dans laquelle la première UAN (805A) est configurée pour déterminer une quantité de ressources radio attribuées à la pluralité de UNDs ;
une seconde UAN (805B) configurée pour communiquer avec au moins deux autres UNDs de la pluralité de UNDs, au moins une seconde BTS (800B) et la première UAN (805A), la seconde UAN (805B) étant configurée pour déterminer une quantité de ressources radio attribuées aux au moins deux autres UNDs de la pluralité de UNDs,
dans lequel chaque UAN sert d'interface entre les BTS associées et la pluralité respective de UND, et
un nombre de ressources radio reçues à chaque UND est attribué par la UAN correspondante.

2. Système selon la revendication 1, configuré pour exécuter la méthode de l'une des revendications 7 à 13.

3. Système selon la revendication 1, dans lequel la première et la seconde UAN (805A, 805B) sont connectées dans une configuration en guirlande.

4. Système selon la revendication 1, dans lequel la première et la seconde UAN (805A, 805B) sont chacune adaptées pour supporter une pluralité d'anneaux avec les UAD associées (810A-810C) de la pluralité d'UNDs (810A-810m).

5. Système selon la revendication 1, dans lequel certaines (810A-810C) de la pluralité de UNDs (810A-810m) sont configurées en anneau en guirlande.

6. Système selon la revendication 1, dans lequel la première et la seconde UAN (805A, 805B) sont chacune adaptées pour contrôler le trafic de paquets pour la pluralité associée de UNDs (810A-810m).

7. Procédé d'acheminement et de commutation de signaux avec plusieurs unités numériques distantes (810A-810m), chacune configurée pour transmettre un ou plusieurs canaux de liaison descendante et pour recevoir un ou plusieurs canaux de liaison montante, le procédé comprenant les étapes consistant à :
configurer une première unité d'accès numérique (UAN) (805A) pour communiquer avec au moins deux (810A-810C) de la pluralité de UNDs et au moins une station de base (BTS) (800A), dans laquelle
la première UAD (805A) est configurée pour déterminer une quantité de ressources radio attribuées à la pluralité de UNDs ;
configurer une seconde UAN (805B) pour communiquer avec au moins deux autres de la pluralité d'UNDs, au moins une seconde BTS (800B) et la première UAN (805A), la seconde UAN (805B) étant configurée pour déterminer une quantité de ressources radio attribuées à au moins deux autres de la pluralité d'UNDs,
dans lequel chaque UAN sert d'interface entre les BTS associées et la pluralité respective de UNDs, et
un nombre de ressources radio reçues à chaque UND est attribué par la UAN correspondante.

8. Procédé selon la revendication 7, dans lequel une première UND (81 OA) émet et reçoit un nombre de canaux différent de celui d'une seconde UND.

9. Procédé selon la revendication 8, dans lequel la première UND (810A) émet et reçoit un plus grand nombre de canaux que la seconde UND.

10. Procédé selon la revendication 7, dans lequel au moins une UAN de la première et de la seconde UAN (805A, 805B) est en outre configurée pour communiquer dans une pluralité de bandes de fréquences.

11. Procédé selon la revendication 7, comprenant en outre l'étape de la modification d'un nombre de canaux reçus et transmis par au moins un de la pluralité de UNDs (810A-810m).

12. Procédé selon la revendication 11, dans lequel la modification du nombre de canaux reçus et transmis consiste à déterminer si l'un au moins de la pluralité de UND (810A-810m) supporte une charge de trafic prédéterminée supérieure à un seuil prédéterminé.

13. Procédé selon la revendication 7, comprenant en outre les étapes consistant à :
déterminer une quantité de ressources radio associées à la pluralité de UNDs (810A-810m) ; et
activer ou désactiver les ressources radio associées à au moins un des UNDs.
